# FASCICULE DE BREVET EUROPEEN

(11) **EP 2 736 750 B1**
(45) Date de publication et mention de la délivrance du brevet: **04.04.2018**
(21) Numéro de dépôt: 12761643.1
(22) Date de dépôt: 26.07.2012
(51) Int. Cl.: B60K 15/00, G01F 23/24, F01M 11/00

(54) **DISPOSITIF DE MESURE DE NIVEAU DE LIQUIDE**
VORRICHTUNG ZUR MESSUNG EINES FLÜSSIGKEITSPEGELS
DEVICE FOR MEASURING LIQUID LEVEL

(30) Priorité: 28.07.2011 FR 1156882
(43) Date de publication de la demande: 04.06.2014
(73) Titulaire: SC2N, 94046 Creteil Cedex (FR)
(72) Inventeur: RIVIERE, Ludovic, 14440 Douvres La Delivrande (FR); LE BOUQUIN, Dominique, 14200 Herouville Saint Clair (FR); MENARD, Franck, 14190 Saint Germain Le Vasson (FR); RENARD, Nicolas, Billericay (GB); MICHAUDET, Xavier, 14000 Caen (FR)
(74) Mandataire: Cardon, Nicolas
(86) Numéro de dépôt international: PCT/FR2012/051769
(87) Numéro de publication internationale: WO 2013/014394

(56) Documents cités:
- FR-A1- 2 901 877
- US-A- 5 210 769

## Description

La présente invention concerne un dispositif de mesure de niveau de liquide et en particulier la détection du niveau d'un liquide dans un véhicule automobile. L'invention s'applique par exemple pour mesurer le niveau d'huile de carter, de la boîte de vitesses ou du le niveau du liquide de refroidissement du circuit de refroidissement, du circuit de climatisation ou le niveau du réservoir d'essence ou de gazole. L'invention peut encore s'appliquer pour détecter le niveau d'un réservoir d'urée dans un véhicule automobile ou dans un poids lourd.

Le contrôle du niveau de liquide dans le domaine automobile est une préoccupation permanente, car il permet de renseigner quant au bon fonctionnement du véhicule.

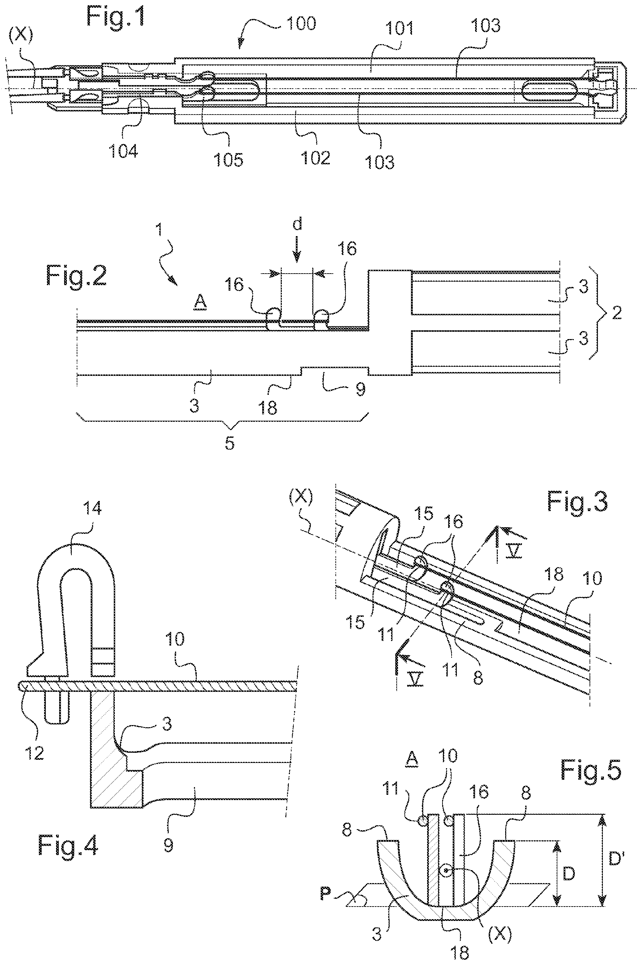

Des dispositifs de mesure de niveau de liquide dans un véhicule automobile sont connus. On a représenté un exemple de dispositif connu 100 sur la figure 1. Le dispositif 100 est destiné à mesurer le niveau de liquide dans un réservoir. Ce dispositif 100 comporte un corps 101 qui est réalisé en deux parties 102 dont une seule est représentée sur la figure 1. Une boucle de fil électrique 103 est disposée dans le corps 101, cette boucle de fil 103 étant électriquement alimentée par un circuit d'alimentation comportant par exemple des pistes 104 raccordées chacune par un embout 105 à une extrémité ouverte de la boucle 103. Ces pistes peuvent être reliées à une alimentation électrique, par exemple une alimentation délivrant un courant continu pendant un intervalle de temps fini pour chaque mesure de niveau.

La boucle de fil 103 forme une sonde résistive qui, à l'état monté sur le véhicule, est partiellement immergée dans le liquide à surveiller. Le fil électrique de la boucle 103 s'échauffe lorsqu'il est parcouru par un courant.

De façon connue, l'étude de la tension mesurée entre les deux extrémités ouvertes de la boucle 103 permet de déterminer le niveau de liquide dans le réservoir, comme expliqué dans le préambule de la demande EP 2 350 579 au nom de la Demanderesse. Le dispositif 100 représenté à la figure 1 est fabriqué en connectant d'abord un embout 105 à une extrémité ouverte de la boucle 103 puis, une fois que chaque extrémité ouverte de la boucle est connectée à un embout 105, en montant l'ensemble formé par la boucle 103 et le circuit d'alimentation de celle-ci dans le corps 100. Cette façon de procéder a plusieurs inconvénients puisqu'elle est coûteuse en termes de temps et que le fil électrique de la boucle 103 peut être détérioré ou allongé lorsqu'il est monté dans le corps 100, après connexion de la boucle aux embouts.

Il existe un besoin pour remédier aux inconvénients précités.

L'invention a pour but de répondre à tout ou partie de ce besoin et elle y parvient, selon l'un de ses aspects, grâce à un dispositif de mesure de niveau de liquide, comportant :
- un corps s'étendant selon un axe longitudinal et ayant au moins une portion ouverte dans laquelle au moins un ajour est ménagé dans la paroi du corps,
- une boucle d'un fil électrique disposée au moins dans la portion ouverte de manière à pouvoir être au contact du liquide et à s'étendre sensiblement parallèlement à l'axe longitudinal du corps, et
- un circuit d'alimentation électrique de la boucle de fil disposé dans le corps, le circuit comprenant deux embouts disposés dans la portion ouverte, chaque embout étant connecté à une extrémité ouverte de ladite boucle,
les embouts étant disposés de façon décalée le long de l'axe longitudinal du corps.

Du fait de la disposition décalée des embouts le long de l'axe longitudinal du corps, un espace est ménagé à proximité de chaque embout et une tête automatisée peut être disposée dans cet espace pour connecter l'embout et une extrémité de la boucle. La connexion met par exemple en oeuvre une soudure et un wrapping et la tête automatisée est une tête de soudure et de wrapping.

Au sens de l'invention, l'axe longitudinal du corps est l'axe selon lequel le corps présente la plus grande dimension.

Egalement au sens de l'invention, la portion ouverte désigne une portion ajourée et les extrémités ouvertes de la boucle sont les extrémités de la boucle.

L'opération de connexion de la boucle de fil au circuit d'alimentation de celle-ci peut ainsi être effectuée alors que la boucle de fil et le circuit d'alimentation sont déjà en place dans le corps. Ainsi, les risques de détériorer ou d'allonger le fil électrique lors d'une mise en place ultérieure dans le corps sont supprimés.

L'ajour peut être tel qu'au niveau de chaque embout, la distance, mesurée perpendiculairement à l'axe longitudinal du corps, entre le plan tangent au fond du corps et le bord de l'ajour soit inférieure à la distance, mesurée perpendiculairement audit axe longitudinal, entre le plan tangent au fond du corps et le fil électrique. La paroi du corps peut ainsi être abaissée, ce qui permet de réduire les risques d'interférence entre la tête automatisée et le corps lors de l'opération de connexion puisque cet abaissement de la paroi facilite le passage de la tête.

On désigne par « fond du corps » la partie de la paroi du corps au niveau de sa portion ouverte qui est la plus éloignée de l'ajour lorsque l'on observe le corps perpendiculairement à son axe longitudinal.

Le circuit d'alimentation peut comprendre des pistes métalliques et l'embout peut former une extrémité de chaque piste.

Le circuit d'alimentation est connecté à une source d'alimentation électrique qui peut être ou non intégrée dans le dispositif.

L'embout peut avoir une forme courbée. L'embout est par exemple surmoulé sur l'intérieur de la paroi du corps.

Le corps peut présenter une forme sensiblement cylindrique, notamment avec une section transversale circulaire, et le décalage entre les deux embouts peut être déterminé en fonction du diamètre du corps.

Le rapport entre le décalage entre les deux embouts et le diamètre du corps peut être compris entre 0,2 et 1. Le décalage est par exemple compris entre 2 mm et 6 mm, notamment entre 3 mm et 5 mm, et le diamètre du corps peut être compris entre 7,6 et 10 mm.

La connexion entre l'extrémité libre de la boucle de fil et l'embout peut être effectuée par soudure et par wrapping.

Selon un exemple de mise en oeuvre de l'invention, le corps comprend deux coquilles, dont l'une s'étend sur toute la longueur du corps tandis que l'autre ne s'étend que sur une portion de la longueur du corps, la portion ouverte du corps correspondant à la portion du corps dans laquelle seule une coquille s'étend. L'ajour peut alors être formé par l'absence d'une des coquilles dans la portion ouverte.

La paroi de l'ajour peut s'étendre sensiblement parallèlement à l'axe longitudinal du corps.

Le dispositif peut comporter un tendeur autour duquel est enroulée la boucle de fil. Ce tendeur permet d'assurer une tension satisfaisante de la boucle de fil, cette tension de la boucle de fil permettant d'assurer un bon fonctionnement du dispositif car elle maintient une précision satisfaisante pour les mesures délivrées par le dispositif.

Le tendeur peut être un support élastique réalisé ou non d'une seule pièce avec le corps, un tel tendeur ayant notamment la forme générale d'un U et travaillant en compression.

En variante, le tendeur peut être configuré de manière à être sollicité en traction par la boucle de fil.

Le tendeur peut alors être réalisé selon l'enseignement de la demande EP 2 350 579 déjà citée dont le contenu est incorporé à la présente demande, au moins en ce qui concerne la réalisation du tendeur. Un tel tendeur peut maintenir une tension de la boucle de fil satisfaisante en dépit de hautes températures, par exemple de l'ordre de 160°C, ou des problèmes de fluage, contrairement à un tendeur travaillant en compression et réalisé en matière plastique.

Le fil est par exemple électriquement résistif, étant réalisé en un métal présentant une telle propriété. Le fil peut être monobrin.

Le dispositif est par exemple configuré pour mesurer le niveau d'huile dans un véhicule automobile. Le dispositif peut être configuré pour mesurer le niveau d'autres liquides dans des réservoirs de véhicule automobile ou de poids lourd.

L'invention a encore pour objet, selon un autre de ses aspects, un procédé de fabrication d'un dispositif de mesure de niveau de liquide, dans lequel :
- on dispose d'un corps s'étendant selon un axe longitudinal et ayant au moins une portion ouverte dans laquelle au moins un ajour est ménagé dans la paroi du corps,
- on place au moins dans la portion ouverte du corps une boucle de fil électrique de manière à ce qu'elle puisse être au contact du liquide et s'étendre sensiblement parallèlement à l'axe longitudinal du corps,
- on place un circuit d'alimentation électrique de la boucle de fil dans le corps, le circuit comprenant deux embouts situés dans la portion ouverte, ces embouts étant disposés de façon décalée le long de l'axe longitudinal du corps et,
- on connecte chaque embout à une extrémité ouverte de la boucle à l'aide d'une tête de connexion introduite dans la portion ouverte du corps.

Les actions ci-dessus du procédé peuvent être effectuées dans l'ordre dans lequel elles sont mentionnées ou non.

La tête de connexion est par exemple une tête automatisée qui peut notamment permettre une connexion par soudure et/ou par wrapping.

L'invention pourra être mieux comprise à la lecture de la description qui va suivre d'un exemple non limitatif de mise en oeuvre de celle-ci et à l'examen du dessin annexé sur lequel :
- la figure 1 représente un dispositif de mesure de niveau de liquide selon l'art antérieur qui a déjà été commenté,
- la figure 2 représente de façon schématique et partielle un dispositif de mesure de niveau de liquide selon un exemple de mise en oeuvre de l'invention,
- la figure 3 est une vue de dessus du dispositif de la figure 2,
- la figure 4 représente de façon schématique un exemple de tendeur pouvant être intégré au dispositif des figures 2 et 3 et,
- la figure 5 est une vue en coupe selon V de la figure 3.

On a représenté de façon schématique aux figures 2 et 3 un dispositif 1 de mesure de niveau de liquide selon un exemple de mise en oeuvre de l'invention.

Le dispositif 1 est dans l'exemple décrit configuré pour mesurer un niveau d'huile de carter dans un véhicule automobile mais l'invention n'est pas limitée à une telle application.

Le dispositif 1 comprend un corps 2 s'étendant selon un axe longitudinal X. Le corps 2 est par exemple réalisé en matière plastique et peut comprendre deux coquilles 3.

Le corps 2 a par exemple en section transversale une forme circulaire et chaque coquille peut avoir une forme semi-circulaire en section transversale.

Comme on peut le voir sur les figures 2 et 3, une des coquilles peut ne s'étendre que le long d'une portion de l'axe X et l'absence de cette coquille 3 définit une portion ouverte 5 du corps 2. Cette portion ouverte 5 du corps comprend dans l'exemple décrit, lorsqu'elle est observée perpendiculairement à l'axe X, une coquille 3 et un ajour A formé par l'absence de l'autre coquille 3. Les bords de cet ajour 3 peuvent alors être définis par la paroi d'extrémité 8 de la coquille 3.

Similairement à ce qui a été représenté sur la figure 1, d'autres ajours 9 peuvent être ménagés dans la coquille 3 au niveau de la portion ouverte 5, ce ou ces autres ajours 9 favorisant la circulation du liquide dont on cherche à mesurer le niveau dans la portion ouverte 5 ou étant configuré pour recevoir un pion pour la fixation du corps sur une autre pièce.

Comme représenté sur les figures 2 et 3, une boucle de fil 10 est disposée dans le corps 2. Cette boucle de fil 10 s'étend dans l'exemple considéré exclusivement dans la portion ouverte 5 du corps 2. La boucle de fil est dans l'exemple décrit formée par un fil monobrin.

Le fil électrique est par exemple en métal, étant notamment à base de nickel chrome.

Le fil peut être très fin, présentant par exemple un diamètre compris entre 60 et 100 µm, notamment compris entre 75 et 95 µm..

La boucle 10 comprend deux extrémités ouvertes 11 et une extrémité fermée 12 opposée aux extrémités ouvertes 11 au niveau de laquelle elle est enroulée autour d'un tendeur 14 dont un exemple est représenté sur la figure 4.

Comme on peut le voir sur les figures 2 et 3, un circuit d'alimentation peut également faire partie du dispositif 1. Ce circuit d'alimentation est relié à une source d'alimentation électrique non représentée. La source d'alimentation peut ou non être intégrée au dispositif et délivre par exemple un courant continu pendant une durée finie de façon répétée. Le circuit d'alimentation comprend des moyens d'acheminement de l'alimentation à la boucle de fil 10. Ces moyens d'acheminement se présentent dans l'exemple des figures 2 et 3 sous la forme de pistes métalliques 15 mais l'invention n'est pas limitée à un tel exemple.

Ces moyens d'acheminement se terminent par un embout 16 qui peut présenter une forme courbée. L'embout 16 peut alors faire saillie depuis le fond 18 de la coquille 3 dans la portion ouverte 5. Le fond 18 de la coquille 3 correspond dans l'exemple des figures 2 et 3 à la portion de la coquille 3 à égale distance des parois 8 définissant l'ajour A de la portion ouverte 5.

Chaque extrémité ouverte 11 de la boucle de fil 10 est connectée à un embout 16. Cette connexion met en oeuvre dans l'exemple décrit une soudure et un wrapping.

Comme on peut le voir sur les figures 2 et 3, les embouts 16 sont disposés de façon décalée le long de l'axe X du corps, c'est-à-dire que lorsque l'on se déplace le long de cet axe X, on rencontre d'abord un des embouts 16 puis l'autre embout, qui suit le premier embout 16 d'un intervalle d. Cet intervalle d est dans l'exemple considéré compris entre deux et six mm, notamment entre trois et cinq mm, et le diamètre du corps 2 est compris entre 7,6 et 10 mm.

La connexion de la boucle de fil 10 à chaque embout 16 et le tendeur 7 peuvent être configurés de manière à ce que la boucle de fil 10 s'étende de façon sensiblement parallèle à l'axe X.

Comme on peut le voir sur la figure 5, dans l'exemple décrit, les parois 8 délimitant la coquille 3 et l'ajour A dans la portion ouverte 5 du corps 2 sont telles que la distance D, mesurée perpendiculairement à l'axe X, entre le plan P tangent à la coquille 3 au niveau du fond 18 est inférieure à la distance D', mesurée perpendiculairement à ce même axe X, entre le plan P et la boucle de fil 10. De cette manière, un espace libre est ménagé au dessus de la paroi 18 pour accéder à la boucle de fil 10 à proximité des extrémités ouvertes 11.

On va maintenant décrire un exemple de fabrication du dispositif 1 dont on vient de décrire un exemple de structure. On dispose, par exemple après moulage, du corps 2 dont les coquilles 3 sont disposées de manière à former la portion ouverte 5.On met en compression le tendeur 7, par exemple à l'aide d'une lame.

On réalise alors le circuit d'alimentation avec les pistes 15 et l'embout 16, par exemple par surmoulage sur le fond du corps 2.

On introduit le fil dont on connecte une extrémité 11 à un embout 16 par wrapping. Le fil est ensuite positionné autour du tendeur 7 pour former une boucle 10 dont l'autre extrémité est connectée par wrapping à l'autre embout 16. On soude ensuite chaque extrémité 11 du fil à l'embout 16 correspondant.

Du fait du décalage d entre les deux embouts 16, on peut introduire pour les opérations de wrapping et de soudure ci-dessus une tête. Le passage de la tête peut encore être facilité par l'abaissement des parois 8.

L'invention n'est pas limitée aux exemples qui viennent d'être décrits.

L'expression « comportant un » doit être comprise comme signifiant « comportant au moins un », sauf lorsque le contraire est spécifié.

## Revendications

1. Dispositif (1) de mesure d'un niveau de liquide dans un véhicule automobile, comportant :
- un corps (2) s'étendant selon un axe longitudinal (X) et ayant au moins une portion ajourée (5) dans laquelle au moins un ajour (A) est ménagé dans la paroi du corps (2),
- une boucle (10) d'un fil électrique disposée au moins dans la portion ajourée (5) de manière à pouvoir être au contact du liquide et à s'étendre parallèlement à l'axe longitudinal (X) du corps (2), la boucle du fil électrique formant une sonde résistive pour la mesure du niveau de liquide,
- un circuit d'alimentation électrique (15, 16) de la boucle de fil disposé dans le corps, le circuit comprenant deux embouts (16) disposés dans la portion ajourée (5), chaque embout (16) étant connecté à une des extrémités (11) de la boucle (10),
**caractérisé en ce que** les embouts (16) sont disposés de façon décalée le long de l'axe longitudinal (X) du corps (2).

2. Dispositif selon la revendication 1, l'ajour (A) étant tel qu'au niveau de chaque embout (16), la distance (D) mesurée perpendiculairement à l'axe longitudinal (X) entre le plan (P) tangent au fond (18) du corps (2) et le bord (8) de l'ajour (A) soit inférieure à la distance (D') mesurée perpendiculairement audit axe longitudinal (X) entre le plan (P) tangent au fond (18) du corps (2) et la boucle de fil (10).

3. Dispositif selon la revendication 1 ou 2, le circuit d'alimentation comprenant des pistes métalliques (15) et l'embout (16) formant une extrémité de chaque piste (15).

4. Dispositif selon la revendication 3, l'embout (16) ayant une forme courbée.

5. Dispositif selon l'une quelconque des revendications précédentes, le corps (2) présentant une forme sensiblement cylindrique et le décalage (d) entre les deux embouts (16) étant déterminé en fonction du diamètre du corps (2).

6. Dispositif selon la revendication 5, le rapport entre le décalage (d) entre les deux embouts (16) et le diamètre du corps (2) étant compris entre 0,2 et 1.

7. Dispositif selon l'une quelconque des revendications précédentes, la connexion entre une extrémité (11) de la boucle (10) et un embout (16) étant effectuée par soudure et par wrapping.

8. Dispositif selon l'une quelconque des revendications précédentes, le corps (2) comprenant deux coquilles (3), dont l'une s'étend sur toute la longueur du corps tandis que l'autre ne s'étend que sur une portion de la longueur du corps, la portion ajourée (5) du corps (2) correspondant à la portion du corps dans laquelle seule une coquille s'étend.

9. Dispositif selon l'une quelconque des revendications précédentes, comportant un tendeur (7) autour duquel la boucle de fil (10) est enroulée.

10. Dispositif selon l'une quelconque des revendications précédentes, chaque embout métallique (16) étant surmoulé dans le corps (2).

11. Dispositif selon l'une quelconque des revendications précédentes, étant configuré pour mesurer un niveau d'huile dans un véhicule automobile.

12. Procédé de fabrication d'un dispositif (1) de mesure de niveau de liquide dans un véhicule automobile, dans lequel :
- on dispose d'un corps (2) s'étendant selon un axe longitudinal (X) et ayant au moins une portion ajourée (5) dans laquelle au moins un ajour (A) est ménagé dans la paroi du corps (2),
- on place une boucle (10) de fil électrique au moins dans la portion ajourée du (5) corps (2) de manière à ce qu'elle puisse être au contact du liquide et s'étendre parallèlement à l'axe longitudinal du corps (X), la boucle du fil électrique formant une sonde résistive pour la mesure du niveau de liquide,
- on place dans le corps un circuit (15, 16) d'alimentation électrique de la boucle de fil (10), ledit circuit comprenant deux embouts (16) situés dans la portion ajourée (5) du corps (2), et,
- on connecte chaque embout (16) à une extrémité (11) de la boucle (10) à l'aide d'une tête de connexion introduite dans la portion ajourée (5) du corps (2),
le procédé étant **caractérisé en ce que** les embouts(16) sont disposés de façon décalée le long de l'axe longitudinal (X) du corps.

## Patentansprüche

1. Vorrichtung (1) zur Messung eines Flüssigkeitspegels in einem Kraftfahrzeug, umfassend:
- einen Körper (2), der sich entlang einer Längsachse (X) erstreckt und wenigstens einen durchbrochenen Abschnitt (5) aufweist, in welchem wenigstens ein Durchbruch (A) in der Wand des Körpers (2) ausgebildet ist,
- eine Schleife (10) eines elektrischen Drahtes, die wenigstens in dem offenen Abschnitt (5) angeordnet ist, derart, dass sie sich in Kontakt mit der Flüssigkeit befinden kann und sich parallel zur Längsachse (X) des Körpers (2) erstreckt,
- eine Stromversorgungsschaltung (15, 16) der Drahtschleife, die in dem Körper angeordnet ist, wobei die Schaltung zwei in dem offenen Abschnitt (5) angeordnete Anschlussstücke (16) umfasst, wobei jedes Anschlussstück (16) mit einem der Enden (11) der Schleife (10) verbunden ist,
**dadurch gekennzeichnet, dass** die Anschlussstücke (16) versetzt entlang der Längsachse (X) des Körpers (2) angeordnet sind.

2. Vorrichtung nach Anspruch 1, wobei der Durchbruch (A) so beschaffen ist, dass an jedem Anschlussstück (16) der senkrecht zur Längsachse (X) gemessene Abstand (D) zwischen der zum Boden (18) des Körpers (2) tangentialen Ebene (P) und dem Rand (8) des Durchbruchs (A) kleiner als der senkrecht zu dieser Längsachse (X) gemessene Abstand (D') zwischen der zum Boden (18) des Körpers (2) tangentialen Ebene (P) und der Drahtschleife (10) ist.

3. Vorrichtung nach Anspruch 1 oder 2, wobei die Versorgungsschaltung metallische Leiterbahnen (15) umfasst und das Anschlussstück (16) ein Ende jeder Leiterbahn (15) bildet.

4. Vorrichtung nach Anspruch 3, wobei das Anschlussstück (16) eine gekrümmte Form aufweist.

5. Vorrichtung nach einem der vorhergehenden Ansprüche, wobei der Körper (2) eine im Wesentlichen zylindrische Form aufweist und der Versatz (d) zwischen den zwei Anschlussstücken (16) in Abhängigkeit vom Durchmesser des Körpers (2) bestimmt wird.

6. Vorrichtung nach Anspruch 5, wobei das Verhältnis zwischen dem Versatz (d) zwischen den zwei Anschlussstücken (16) und dem Durchmesser des Körpers (2) zwischen 0,2 und 1 liegt.

7. Vorrichtung nach einem der vorhergehenden Ansprüche, wobei die Verbindung zwischen einem offenen Ende (11) der Schleife (10) und einem Anschlussstück (16) durch Löten und durch Umwickeln bewirkt wird.

8. Vorrichtung nach einem der vorhergehenden Ansprüche, wobei der Körper (2) zwei Schalen (3) umfasst, von denen die eine sich über die gesamte Länge des Körpers erstreckt, während sich die andere nur über einen Abschnitt der Länge des Körpers erstreckt, wobei der offene Abschnitt (5) des Körpers (2) dem Abschnitt des Körpers entspricht, in welchem sich nur eine Schale erstreckt.

9. Vorrichtung nach einem der vorhergehenden Ansprüche, welche einen Spanner (7) umfasst, um den die Drahtschleife (10) gewickelt ist.

10. Vorrichtung nach einem der vorhergehenden Ansprüche, wobei jedes metallische Endstück (16) in den Körper (2) eingegossen ist.

11. Vorrichtung nach einem der vorhergehenden Ansprüche, welche dafür ausgelegt ist, einen Ölstand in einem Kraftfahrzeug zu messen.

12. Verfahren zur Herstellung einer Vorrichtung (1) zur Messung eines Flüssigkeitspegels in einem Kraftfahrzeug, wobei:
- ein Körper (2) vorhanden ist, der sich entlang einer Längsachse (X) erstreckt und wenigstens einen durchbrochenen Abschnitt (5) aufweist, in welchem wenigstens ein Durchbruch (A) in der Wand des Körpers (2) ausgebildet ist,
- eine Schleife (10) eines elektrischen Drahtes wenigstens in dem offenen Abschnitt (5) des Körpers (2) angeordnet wird, derart, dass sie sich in Kontakt mit der Flüssigkeit befinden kann und sich parallel zur Längsachse des Körpers (X) erstreckt,
- in dem Körper eine Schaltung (15, 16) zur Stromversorgung der Drahtschleife (10) angeordnet wird, wobei die Schaltung zwei in dem offenen Abschnitt (5) des Körpers (2) befindliche Anschlussstücke (16) umfasst, wobei diese Anschlussstücke (16) versetzt entlang der Längsachse (X) des Körpers angeordnet sind, und
- jedes Anschlussstück (16) mit einem Ende (11) der Schleife (10) mithilfe eines Verbindungskopfes verbunden wird, der in den offenen Abschnitt (5) des Körpers (2) eingeführt wird.

## Claims

1. Device (1) for measuring a liquid level in a motor vehicle including:
- a body (2) running along a longitudinal axis (X) and having at least one open portion (5) in which at least one aperture (A) is provided in the wall of the body (2),
- a loop (10) of electrical wire disposed at least in the open portion (5) so as to be able to be in contact with the liquid and to run substantially parallel to the longitudinal axis (X) of the body (2),
- an electrical power supply circuit (15, 16) of the wire loop disposed in the body, the circuit including two end fittings (16) disposed in the open portion (5), each end fitting (16) being connected to one of the ends (11) of the loop (10), **characterized in that**
the end fittings (16) are disposed in an offset manner along the longitudinal axis (X) of the body (2).

2. Device according to Claim 1, the aperture (A) being such that at the level of each end fitting (16) the distance (D) measured perpendicularly to the longitudinal axis (X) between the plane (P) tangential to the bottom (18) of the body (2) and the edge (8) of the aperture (A) is less than the distance (D') measured perpendicularly to said longitudinal axis (X) between the plane (P) tangential to the bottom (18) of the body (2) and the wire loop (10).

3. Device according to Claim 1 or 2, the power supply circuit including metal tracks (15) and the end fitting (16) forming an end of each track (15).

4. Device according to Claim 3, the end fitting (16) having a curved shape.

5. Device according to any one of the preceding claims, the body (2) having a substantially cylindrical shape and the offset (d) between the two end fittings (16) being determined as a function of the diameter of the body (2).

6. Device according to Claim 5, the ratio between the offset (d) between the two end fittings (16) and the diameter of the body (2) being between 0.2 and 1.

7. Device according to any one of the preceding claims, the connection between an open end (11) of the loop (10) and an end fitting (16) being effected by soldering and wire-wrapping.

8. Device according to any one of the preceding claims, the body (2) comprising two shells (3), one of which runs over the whole of the length of the body whereas the other runs over only a portion of the length of the body, the open portion (5) of the body (2) corresponding to the portion of the body in which only one shell runs.

9. Device according to any one of the preceding claims, including a tensioner (7) around which the wire loop (10) is wound.

10. Device according to any one of the preceding claims, each metal end fitting (16) being molded into the body (2).

11. Device according to any one of the preceding claims, being configured to measure an oil level in an automobile vehicle.

12. Method of manufacturing a device (1) for measuring a liquid level in a motor vehicle wherein:
- a body (2) is obtained running along a longitudinal axis (X) and having at least one open portion (5) in which at least one aperture (A) is provided in the wall of the body (2),
- a loop (10) of electrical wire is placed at least in the open portion (5) of the body (2) so that it can be in contact with the liquid and run parallel to the longitudinal axis (X) of the body,
- there is placed in the body an electrical power supply circuit (15, 16) of the wire loop (10), said circuit including two end fittings (16) situated in the open portion (5) of the body (2), these end fittings (16) being disposed in an offset manner along the longitudinal axis (X) of the body, and
- each end fitting (16) is connected to an open end (11) of the loop (10) by means of a connection head introduced into the open portion (5) of the body (2).
